(19) Europäisches Patentamt / European Patent Office / Office européen des brevets

(11) **EP 2 343 571 A1**

(12) **EUROPEAN PATENT APPLICATION**

(43) Date of publication:
**13.07.2011 Bulletin 2011/28**

(51) Int Cl.:
*G01S 13/34* (2006.01)    *G01S 7/41* (2006.01)
*G01S 13/02* (2006.01)

(21) Application number: **10250042.8**

(22) Date of filing: **11.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Method of providing a radar high range resolution profile**

(57)    A method 10 of providing a radar high range resolution (HRR) profile of a target comprises: generating and transmitting a stepped-frequency waveform radar signal 12; sampling echo signals to generate at least one receiver sample for each frequency step 14; generating a Fourier transform (FT) of each receiver sample to form frequency domain receiver samples 16; spectrally stitching the frequency domain receiver samples to form a stitched spectrum 18; applying a spectral scaling comprising the ratio of a reference wideband chirp spectrum to a reference spectrally stitched spectrum 20 to the stitched spectrum to form a scaled spectrally stitched spectrum; generating a cross-correlation of the scaled spectrally stitched spectrum and the reference spectrally stitched spectrum 22.

Generate and transmit stepped-frequency waveform radar signal to target

Receive radar echo signals from target and sample to generate at least one receiver sample corresponding to each frequency step of radar signal

Generate Fourier transform of receiver sample for each frequency step to form frequency domain receiver samples

Spectrally stitch frequency domain receiver samples of each frequency step to form a stitched spectrum

Apply a spectral scaling to the stitched spectrum to form a scaled spectrally stitched spectrum, spectral scaling comprising the ratio of a reference wideband chirp spectrum to a reference spectrally stitched spectrum

Generate a cross-correlation of the scaled spectrally stitched spectrum and the reference spectrally stitched spectrum, to form a high range resolution profile of the target

Fig. 3

EP 2 343 571 A1

**Description**

The invention relates to a method of providing a radar high range resolution profile of a target.

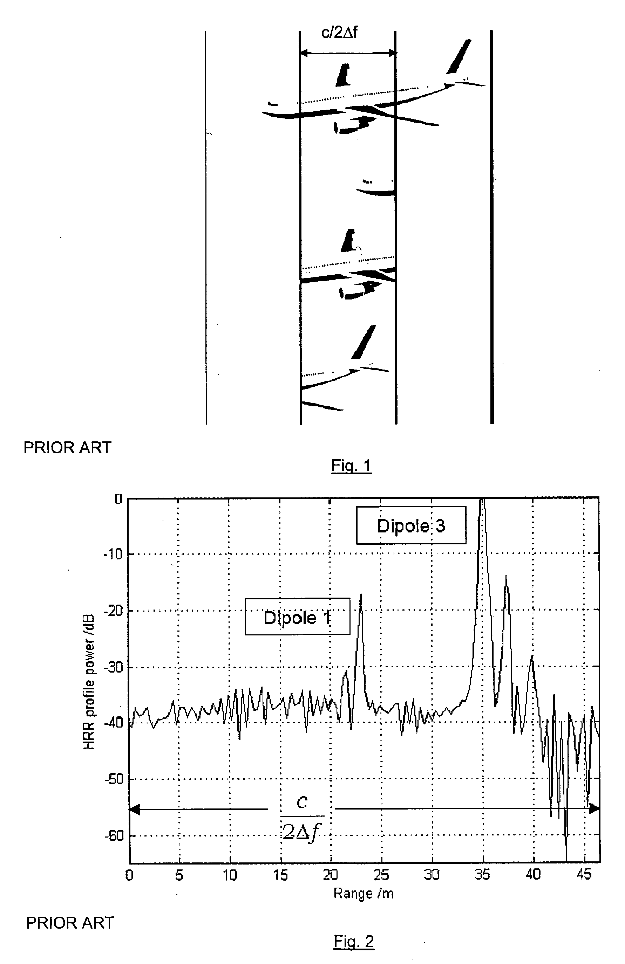

There is a need for radar systems to offer non-cooperative target recognition (NCTR) capability, in order to enable rapid and reliable identification of targets. In practical terms, this consists of a capability to generate High Range Resolution (HRR) profiles of targets that are already being tracked. Feature extraction algorithms can then be applied to the HRR profiles, which enable a classifier to identify a target in conjunction with a database of known targets. The success of NCTR capabilities is very much dependent on the quality of the HRR profiles obtained for both reference targets and during operation. One method of producing HRR profiles, known as the "classical" HRR processing method, comprises transmitting radar signals consisting of bursts of linearly swept chirp pulses, with the carrier frequency of each burst being stepped by a constant interval $\Delta f$. The radar signals are directed at a target which is already being tracked, so that the target's range and range-rate are already known. The classical method of HRR processing produces a range window which is limited to $c/2\Delta f$, where c is the speed of light. The resulting range window is often shorter than the length of an aircraft which is to be profiled, for example a frequency step of 3 MHz will result in a range window having a length of approximately 50 metres and a large aircraft such as a Boeing 747 or an Airbus A380 has a length of 70 to 80 metres. This results in an HRR profile which suffers from a "wrap around" problem, in which the principal returns from the nose, main engines and tail fin appear out of their natural range order, as illustrated in Figure 1. The classical method also suffers from the problem that as scattering centres in the target become further separated the gain relative to those within the range window rapidly reduces, as illustrated in Figure 2.

One solution which has been proposed to overcome at least some of the above limitations of the classical method of HRR processing involves spectrally stitching the receiver samples in the frequency domain to synthesize a "pseudo-chirp" of bandwidth $Q\Delta f$ where Q is the number of bursts in the radar signal. The resulting spectrally stitched pseudo-chirp is converted back into the time domain and correlated with an equivalent spectrally stitched spectrum of receiver samples obtained from a reference single point static target. This is reported in A. French, "Improved high range resolution profiling of aircraft using stepped-frequency waveforms with an S-band phased array radar", 2006 IEEE Radar Conference 2006.

It is an object to provide an improved method of providing a radar high range resolution profile of a target.

According to an aspect of the present invention there is provided a method of providing a radar high range resolution profile of a target, the method comprising:

    i. generating and transmitting a radar signal to the target, the radar signal having a signal bandwidth and comprising a stepped-frequency waveform comprising a first plurality of frequency steps;

    ii. receiving corresponding radar echo signals from the target and sampling the echo signals to generate at least one receiver sample corresponding to each frequency step;

    iii. generating a Fourier transform of the at least one receiver sample for each frequency step to form frequency domain receiver samples of each frequency step;

    iv. spectrally stitching the frequency domain receiver samples of each frequency step to form a stitched spectrum;

    v. applying a spectral scaling to the stitched spectrum to thereby form a scaled spectrally stitched spectrum, the spectral scaling comprising the ratio of a reference wideband chirp spectrum to a reference spectrally stitched spectrum, the reference wideband chirp spectrum comprising a Fourier transform of receiver samples corresponding to illuminating a reference static point target with a wideband radar signal having a bandwidth comprising the signal bandwidth and the reference spectrally stitched spectrum being generated by illuminating the reference static point target with the radar signal and applying steps ii. to iv.; and

generating a cross-correlation of the scaled spectrally stitched spectrum and the reference spectrally stitched spectrum to thereby form a high range resolution profile of the target.

The method enables a radar high-range resolution profile of a target to be provided having reduced aliases within the profile due to the spectral scaling of the stitched spectrum in step v.

Step iv. may comprise:

    generating an inverse Fourier transform of the scaled spectrally stitched spectrum to form time domain samples of the scaled spectrally stitched spectrum; and

    generating an inverse Fourier transform of the reference spectrally stitched spectrum to form time domain samples of the reference spectrally stitched spectrum and cross correlating the time domain samples of the scaled spectrally stitched spectrum and the time domain samples of the reference spectrally stitched spectrum.

The cross-correlation is thus carried out in the time domain.

Step iv. may alternatively comprise:

multiplying the scaled spectrally stitched spectrum with the reference spectrally stitched spectrum; and

generating an inverse Fourier transform of the multiplied spectrum.

The cross-correlation is thus implemented as a multiplication in the frequency domain followed by an inverse Fourier transform. Generating the cross-correlation in this manner may be more efficient than generating it in the time-domain. The stepped-frequency waveform preferably comprises a said first plurality, Q, of bursts, each burst comprising a second plurality, P, of linearly chirped pulses each having a carrier frequency and a chirp bandwidth, the carrier frequency of each pulse within a burst being substantially the same and the carrier frequency of consecutive bursts being incremented by a frequency step. Preferably, the chirp bandwidth of the pulses is greater than the frequency step and includes a central portion having a bandwidth equal to the frequency step, the chirp bandwidths of pulses in consecutive bursts overlapping such that their central portions form a spectral continuum. The use of a chirp bandwidth which is greater than the frequency step enables the edges of the chirp bandwidth of each pulse to be removed prior to spectral stitching to form an improved spectral continuum.

Preferably, step ii. comprises sampling the echo signals at a sampling frequency, $f_s$, to generate a third plurality, K, of receiver samples for each frequency step, $\Delta f$.

Step iii. preferably comprises generating a discrete Fourier transform of the receiver samples for each frequency step.

Step iv. preferably comprises:

providing an array comprising a said first plurality of array slots, each array slot corresponding to one of said frequency steps and comprising a fourth plurality of array elements; and

for each frequency step: selecting a said fourth plurality, $N_{stitch}$, of the frequency domain receiver samples, the said fourth plurality of samples comprising frequency domain receiver samples located at the centre of the Fourier transform of the respective frequency step; and locating said frequency domain receiver samples in said respective array slot, each sample forming a respective element of the array.

Selecting only the $N_{sfitch}$ receiver samples located at the centre of the Fourier transform of each frequency step removes any deep oscillations, known as 'Fresnel ringing', present at the edge of the power spectrum of the respective chirp pulse from the resulting inverse Fourier transform and reduces the size of aliases generated within the resulting HRR profile.

Preferably, the following conditions are satisfied:
said fourth plurality, $N_{stitch}$ is a positive integer given by

$$N_{stitch} = \frac{K\Delta f}{f_s} \;;$$

$$N_{overlap} = \frac{1}{2}\left(K - N_{stitch}\right)$$

where $N_{overlap}$ is a positive integer; and

$$N_{stitch} + 2N_{overlap} = K$$

Step ii. may further comprise transforming said third plurality, K, of receiver samples of a said frequency step by adding a fourth plurality, m, of padding samples such that the above conditions are satisfied. The padding samples preferably comprise zeros.

Transforming the number of receiver samples, K, by adding m padding samples ensures that the above conditions are satisfied and enables the central portions of the Fourier transforms of the receiver samples of each frequency step to form a continuous, linear progression. This reduces periodic discontinuities in the stitched spectrum in the frequency domain and thus reduces the production of aliases within the resulting HRR profile.

Step v. preferably comprises applying a spectral scaling to each element of the array to thereby form a scaled array comprising the scaled spectrally stitched spectrum. Preferably, a spectral scaling is provided for each said frequency step and is applied to the corresponding frequency domain receiver samples in the respective array slot.

Applying a spectral scaling for each frequency step enables improved scaling to be performed, optimized for each frequency step.

Preferably, the wideband radar signal has a carrier frequency $f_{Tx} = f_1 + \dfrac{Q}{2}\Delta f$ , where $f_1$ is the carrier frequency of the pulses of the first frequency step , and the reference wideband chirp spectrum comprises a Fourier transform of the wideband radar signal multiplied by a top hat function having a width $Q\Delta f$, the result being sampled with range cells of $\dfrac{c}{2Q\Delta f}$ .

Preferably, the wideband chirp spectrum, $\Xi_{WB}(f)$, is calculated as

$$\Xi_{WB}(f) = \begin{cases} a_0 e^{-\frac{4\pi i R_0}{c} f} \mathcal{F}[\psi_{WB}(t)] & f_1 - \frac{\Delta f}{2} \leq f < f_1 + (Q - \frac{1}{2})\Delta f \\ 0 & \text{otherwise} \end{cases}$$

where f is the spectral frequency, $a_0$ is the reflectivity of the reference static point target, and $R_0$ is the range of the reference static point target.

Applying the spectral scalings thus enables the stitched spectrum to be modified to make it more similar to an ideal wideband chirp spectrum covering the same signal bandwidth. Aliases within the resulting HRR profile are thereby reduced.

The method preferably further comprises applying a power subtraction to the high range resolution profile following step vi., the power subtraction being arranged to reduce the power of any aliases caused by the spectral stitching in the high range resolution profile.

Applying the power subtraction preferably comprises:

determining a maximum power, $P_{max}$, within the high range resolution profile and identifying the range, $R_{max}$, corresponding to the maximum power;

defining alias regions of the high range resolution profile, the alias regions respectively having centres at ranges $R_{max} + n\dfrac{c}{2\Delta f}$ , where $n \neq 0$, and each alias region having a width of $\pm\dfrac{c}{4\Delta f}$ about its centre;

determining a maximum power, $A_{max}$, within the alias regions, each alias region having a power spectrum;
defining a central region of the high range resolution profile, the central region having a power spectrum and having a centre at the range, $R_{max}$, corresponding to the maximum power, $P_{max}$, and having a width of $\pm\dfrac{c}{4\Delta f}$ about its centre;

making a copy of the central region of the high range resolution profile and multiplying the power spectrum of copy by $\dfrac{A_{max}}{P_{max}}$ to form a scaled copy of the power spectrum of the central region; and

subtracting the scaled copy of the power spectrum of the central region from the power spectrum of each alias region.

The power subtraction applied to the HRR profile and the power level modification reduces the size of aliases within the HRR profile.

Embodiments of the invention will now be described in detail, by way of example only, with reference to the accompanying drawings, in which:

Figure 1 is an illustration of the problem of wrapping experienced by the classical method of HRR processing for a target which is longer than the range window, c/2Δf;

Figure 2 shows an HRR profile obtained using the classical method for a target comprising 2 dipoles spaced by 50 metres;

Figure 3 shows the steps of a method of providing a radar high range resolution profile of a target according to a first embodiment of the invention;

Figure 4 shows the steps of a method of providing a radar high range resolution profile of a target according to a second embodiment of the invention;

Figure 5 shows the steps of a method of providing a radar high range resolution profile of a target according to a third embodiment of the invention;

Figure 6 illustrates the step of spectral stitching of a method of providing a radar high range resolution profile of a target according to a fourth embodiment of the invention and shows: a) the Fourier transform of a single chirp pulse; b) a stitched spectrum resulting from stitching a plurality of frequency domain receiver samples; and c) the phase of the spectrally stitched spectrum of b).;

Figure 7 shows a) a classical HRR profile of a target comprising 2 dipoles spaced by 58 metres and b) an HRR profile for the same target obtained using the method of the sixth embodiment of the invention;

Figure 8 shows a) the classical HRR profile and b) the HRR profile obtained using the method of the sixth embodiment of the invention of a target comprising 2 static dipoles spaced by 58 metres, the radar signal comprising a waveform of 128 bursts of linearly chirped pulses of bandwidth 4.5 MHz with a frequency step of 3.2 MHz; and

Figure 9 shows an HRR profile of a moving point target obtained using the method of the sixth embodiment, showing a) the HRR profile including aliases and b) the HRR profile following de-aliasing.

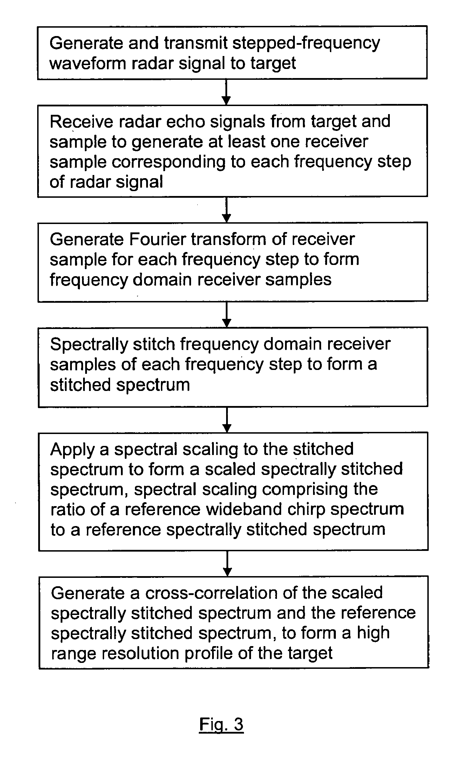

Referring to Figure 3, a first embodiment of the invention provides a method 10 of providing a radar high range resolution (HRR) profile of a target. The method 10 comprises the steps:

i. generating and transmitting a radar signal to the target 12, the radar signal having a signal bandwidth and comprising a stepped-frequency waveform comprising a first plurality of frequency steps;

ii. receiving corresponding radar echo signals from the target and sampling the echo signals to generate at least one receiver sample corresponding to each frequency step 14;

iii. generating a Fourier transform of the at least one receiver sample for each frequency step to form frequency domain receiver samples of each frequency step 16;

iv. spectrally stitching the frequency domain receiver samples of each frequency step to form a stitched spectrum 18;

v. applying a spectral scaling to the stitched spectrum to thereby form a scaled spectrally stitched spectrum, the spectral scaling comprising the ratio of a reference wideband chirp spectrum to a reference spectrally stitched spectrum 20, the reference wideband chirp spectrum comprising a Fourier transform of receiver samples corresponding to illuminating a reference static point target with a wideband radar signal having a bandwidth comprising the signal bandwidth and the reference spectrally stitched spectrum being generated by illuminating the reference static point target with the radar signal and applying steps ii. to iv.; and

vi. generating a cross-correlation of the scaled spectrally stitched spectrum and the reference spectrally stitched spectrum 22, to thereby form a high range resolution profile of the target.

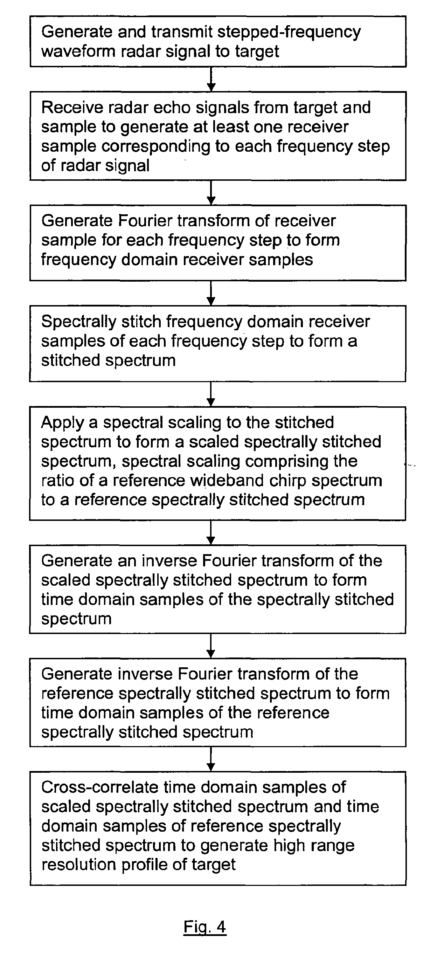

A second embodiment of the invention provides a method 30 of providing a radar high range resolution (HRR) profile of a target, as illustrated in Figure 4. The method 30 is substantially the same as the method 10 of Figure 3, with the following modifications. The same reference numbers are retained for corresponding steps.

In this embodiment, the stepped-frequency waveform comprises a said first plurality of bursts, Q, each comprising a second plurality, P, of coherent pulses. Each pulse within a burst is transmitted at a carrier frequency $f_{Tx}$ and has a bandwidth, B, and a pulse duration, $\tau$. The carrier frequency of the first burst is $f_1$ and the carrier frequency of consecutive bursts is incremented by a frequency step $\Delta f$. The signal bandwidth of the radar signal is therefore $Q\Delta f$.

Step iv. is carried out in the time domain in this embodiment and comprises:

generating an inverse Fourier transform of the scaled spectrally stitched spectrum to form time domain samples of the scaled spectrally stitched spectrum 32; and

generating an inverse Fourier transform of the reference spectrally stitched spectrum to form time domain samples of the reference spectrally stitched spectrum 34 and cross correlating the time domain samples of the scaled spectrally stitched spectrum and the time domain samples of the reference spectrally stitched spectrum 36.

The cross-correlation forms a high range resolution profile of the target.

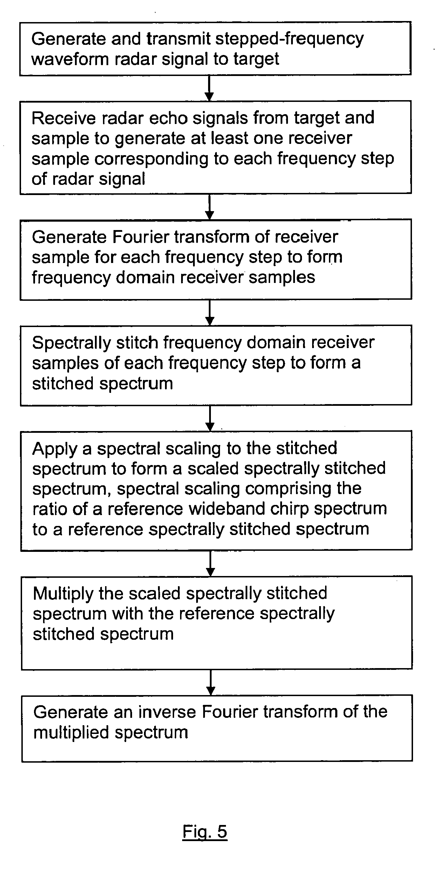

A third embodiment of the invention provides a method 40 of providing a radar high range resolution (HRR) profile of a target, as illustrated in Figure 5. The method 40 is substantially the same as the method 30 of Figure 4, with the following modifications. The same reference numbers are retained for corresponding steps.

In this embodiment, step iv. is carried out in the frequency domain and comprises:

multiplying the scaled spectrally stitched spectrum with the reference spectrally stitched spectrum 42; and

generating an inverse Fourier transform of the multiplied spectrum 44.

Generating the cross-correlation in the frequency domain may be more efficient than doing so in the time domain.

It will be appreciated by the person skilled in the art that the alternative implementations of step iv. given in Figures 3 and 4 are equivalent, by virtue of the convolution theorem.

A fourth embodiment of the invention provides a method of providing a radar HRR profile of a target which is substantially the same as any of the methods 10, 30, 40 of the previous embodiments, with the following modifications.

In this embodiment the bandwidth of the chirp pulses is greater than the frequency step, such that each chirp pulse includes a central portion having a bandwidth equal to the frequency step. The chirp bandwidth of pulses in consecutive bursts overlap such that their central portions form a spectral continuum.

In this embodiment, step ii. comprises sampling the echo signals at a sampling frequency, $f_s$, to generate a third plurality, K, of receiver samples for each frequency step.

In this embodiment, step iii. comprises generating a discrete Fourier transform of the receiver samples for each frequency step. The spectral stitching of step iv. comprises providing an array comprising a number of array slots equal to the number of bursts within the radar signal. Each array slot corresponds to one of the frequency steps. Each array slot comprises a fourth plurality of array elements. The step of spectrally stitching comprises, for each frequency step, selecting a said fourth plurality, $N_{stitch}$, of the frequency domain receiver samples of that step and locating the selected receiver samples in their respective array slot. Each sample thus forms a respective element of the array. The $N_{stitch}$ receiver samples comprise the fourth plurality of samples located at the centre of the discrete Fourier transform of the respective frequency step. $N_{stitch}$ is given by:

$$N_{stitch} = \frac{K\Delta f}{f_s}$$

and $N_{stitch}$ is a positive integer.

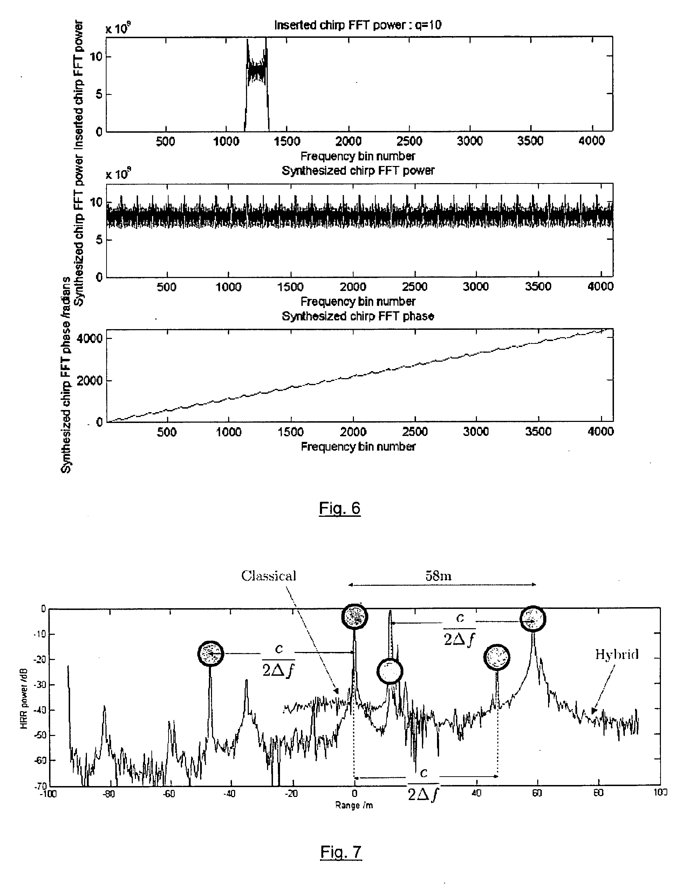

Figure 6 illustrates the steps of spectrally stitching the frequency domain receiver samples. Figure 6a shows the discrete Fourier transform of a single chirp pulse and Figure 6b shows the spectrally stitched spectrum which results from stitching the central portions of the chirp pulses within each frequency step. Figure 6c shows the phase of the spectrally stitched spectrum.

The process of selecting only the $N_{stitch}$ central samples from the Fourier transform for each frequency step removes any deep oscillations, known as 'Fresnel ringing', present at the edge of the power spectrum of the respective chirp pulse from the Fourier transform so that only the central portions of each chirp are stitched together to form a spectral continuum in the spectrally stitched spectrum. In this embodiment, the process of applying a spectral scaling of step v. comprises applying a spectral scaling to each element of the array of the spectrally stitched spectrum. A spectral scaling is provided for each frequency step and is applied to the corresponding frequency domain receiver samples in the respective array slot. The spectral scaling for each frequency step is calculated as the ratio of a reference wideband chirp spectrum to a reference spectrally stitched spectrum. The reference wideband chirp spectrum is obtained by modelling the spectrum obtained from a wideband radar signal having a carrier frequency $f_{Tx} = f_1 + \dfrac{Q}{2}\Delta f$,

where f1 is the carrier frequency of the pulses of the first burst. The reference wideband chirp spectrum comprises a Fourier transform of the wideband radar signal multiplied by a top hat function having a width $Q\Delta f$, the result being sampled with range cells of

The reference spectrally stitched spectrum is generated by illuminating a reference static point target with a radar signal having the same waveform as used to illuminate the target being profile and applying steps ii. to iv. above.

To achieve sub-meter range resolution requires a radar signal having a bandwidth in excess of 149 MHz. As this is well outside the bandwidth capabilities of many radar systems, including multi-function phased array radar, the use of stepped-frequency waveforms has been introduced to solve the bandwidth problem, by constructing the desired bandwidth from a number of frequency steps. However, the resulting spectrally stitched spectra do not look and behave exactly as the equivalent spectra resulting from a wideband radar signal. Applying the spectral scalings compensates for amplitude and phased discontinuities which appear in the spectrally stitched spectra, to thereby make the spectrally stitched spectra look more like the equivalent wideband spectra. The spectral scalings essentially comprise a measure of the difference between the reference spectrally stitched spectrum, obtained by illuminating a reference static point target with the radar signal used to illuminate the target being profiled, and a reference wideband chirp spectrum corresponding to illuminating the same reference static point target with a wideband radar signal having a bandwidth which comprises the signal bandwidth. Multiplying the spectrally stitched spectrum of the target with the spectral scalings for that waveform therefore essentially has the effect of making the spectrally stitched spectrum look more like the equivalent wideband spectrum. The basis of the spectral scalings is as follows. The radar signal has a stepped frequency waveform comprising chirp pulses of a linear chirp bandwidth, B, and duration, $\tau$, transmitted using a carrier frequency $f_{Tx}(q) = f_1 + (q-1)\Delta f$, which is represented by a time domain complex signal $\psi_q(t)$.

The received signal, for frequency step q, resulting from the reflection of the radar signal from the target is given by

$$\Psi_q(t) = \sum_{n=1}^{N} a_n \psi_q\left(t - \frac{2R_n}{c}\right)$$

Where, assuming a scattering centre decomposition of this signal, the received signal can be constructed from the transmitted radar signal and the ranges ($R_n$} and reflectivities {$a_n$} of the N scatterers comprising the target.

The Fourier transform of the receiver samples from frequency step q is given by:

$$\Theta_q(f) = \mathcal{F}[\Psi_q] = \sum_{n=1}^{N} a_n \Im\left[\psi_q\left(t - \frac{2R_n}{c}\right)\right]$$

Applying the Fourier shift theorem, $F[y(t-a)] = e^{-2\pi i a f} F[y(t)]$, the Fourier transform can be written as :

$$\Theta_q(f) = \sum_{n=1}^{N} a_n e^{-\frac{4\pi i R_n}{c} f} \mathcal{F}\left[\psi_q(t)\right]$$

Following spectral stitching of the resulting frequency domain receiver samples of each frequency step, the stitched spectrum is given by:

$$\Xi(f) = \sum_{q=1}^{Q} \Lambda_q$$

where

$$\Lambda_q = \begin{cases} \Theta_q(f) & f_{Tx}(q) - \frac{1}{2}\Delta f \leq f < f_{Tx}(q) + \frac{1}{2}\Delta f \\ 0 & \text{otherwise} \end{cases}$$

which gives

$$\Lambda_q = \begin{cases} \mathcal{F}\left[\psi_q(t)\right] \sum_{n=1}^{N} a_n e^{-\frac{4\pi i R_n}{c} f} & f_1 + (q - \frac{3}{2})\Delta f \leq f < f_1 + (q - \frac{1}{2})\Delta f \\ 0 & \text{otherwise} \end{cases}$$

Since the non-zero regions of Aq form a continuous frequency range without gaps or overlaps, the stitched spectrum can be written as the product of a term based on the scattering centre decomposition (SCT) and a term based on the transmitted step frequency waveform (WFT), as follows:

$$\Xi(f) = \underbrace{\sum_{n=1}^{N} a_n e^{-\frac{4\pi i R_n}{c} f}}_{\text{Scattering centre term (SCT)}} \times \underbrace{\sum_{q=1}^{Q} \begin{cases} \mathcal{F}\left[\psi_q(t)\right] & f_1 + (q - \frac{3}{2})\Delta f \leq f < f_1 + (q - \frac{1}{2})\Delta f \\ 0 & \text{otherwise} \end{cases}}_{\text{Waveform term (WFT)}}$$

which can be rewritten as

$$\Xi(f) = \begin{cases} \text{SCT} \times \text{WFT} & f_1 - \frac{\Delta f}{2} \le f < f_1 + (Q - \frac{1}{2})\Delta f \\ 0 & \text{otherwise} \end{cases}$$

The spectrum obtained by illuminating a reference static point target at a range $R_0$ with a wideband radar signal, $\psi_{WB}(t)$, having a carrier frequency $f_{Tx} = f_1 + \frac{Q}{2}\Delta f$ and a central bandwidth $Q\Delta f$, can be written as

$$\Xi_{WB}(f) = \begin{cases} a_0 e^{-\frac{4\pi i R_0}{c}f}\mathcal{F}[\psi_{WB}(t)] & f_1 - \frac{\Delta f}{2} \le f < f_1 + (Q - \frac{1}{2})\Delta f \\ 0 & \text{otherwise} \end{cases}$$

The reference spectrally stitched spectrum obtained by illuminating the same reference static point target with the radar signal is given by

$$\begin{aligned} \Xi_{PT}(f) &= e^{-\frac{4\pi i R_0}{c}f}\sum_{q=1}^{Q}\begin{cases} \mathcal{F}[\psi_q(t)] & f_1 + (q - \frac{3}{2})\Delta f \le f < f_1 + (q - \frac{1}{2})\Delta f \\ 0 & \text{otherwise} \end{cases} \\ &= e^{-\frac{4\pi i R_0}{c}f}\begin{cases} \text{WFT} & f_1 - \frac{\Delta f}{2} \le f < f_1 + (Q - \frac{1}{2})\Delta f \\ 0 & \text{otherwise} \end{cases} \end{aligned}$$

The spectral scalings, being the ratio of the reference wideband chirp spectrum to the reference spectrally stitched spectrum is given by:

$$W(f) = \frac{\Xi_{WB}(f)}{\Xi_{PT}(f)}$$

For a point target at range $R_0$, $\Xi(f)W(f) = \Xi_{WB}(f)$. Because of the decomposition of the target and waveform terms in $\Xi$, for multi-scatter targets $\Xi(f)W(f)$ is equal to the SCT multiplied by the band-limited $\vartheta[\psi_{WB}(t)]$, i.e. the Fourier Transform of the wideband waveform $\psi_{WB}(t)$ multiplied by a 'top hat' of width $Q\Delta f$. In the time domain this is the convolution of the wideband chirp, a sinc function of periodicity $\frac{c}{2Q\Delta f}$ and a comb of unit impulses which correspond to the scattering centre decomposition. If this result is sampled with range cells of $\frac{c}{2Q\Delta f}$ then this result is effectively the receiver samples one would obtain using a wideband waveform.

Applying the spectral scalings compensates for amplitude and phase discontinuities present in the spectrally stitched spectrum, which reduces the amplitude of aliases produced in the resulting HRR profile at range intervals of

$$\frac{c}{2\Delta f}.$$

A fifth embodiment of the invention provides a method of providing a radar HRR profile of target which is substantially the same as the previous embodiment, with the following modifications.

In this embodiment, step ii. further comprises transforming the number of receiver samples, K, by adding padding samples to the receiver samples of each frequency step. The bandwidth corresponding to the $N_{stitch}$ samples extracted from the frequency domain receiver samples of each frequency step must form a continuous, linear progression. If this condition is not satisfied the resulting HRR profile will include aliases resulting from periodic discontinuities in the spectrally stitched spectrum, in the frequency domain. To achieve this, the following conditions must be satisfied:

$$N_{stitch} = \frac{K\Delta f}{f_s};$$

$$N_{overlap} = \frac{1}{2}\left(K - N_{stitch}\right);$$

and

$$N_{stitch} + 2N_{overlap} = K$$

Each of $N_{stich}$, $N_{overlap}$ and K are required to be positive integers. Where the number of receiver samples, K, results in the above conditions not being satisfied, the conditions can be satisfied by transforming the number of receiver samples, K, by adding, a plurality, m, of padding samples, in the form of zeros, to the receiver samples. Therefore K is transformed to K + m. Aliases in the HRR profiles are thus reduced.

A sixth embodiment of the invention provides a method of providing a radar HRR profile of a target, which is substantially the same as any of the methods of the previous embodiments, described above, with the following modifications.

In this embodiment, the method further comprises applying a power subtraction to the HRR profile generated in step vi. The power subtraction is arranged to reduce the power of aliases in the HRR profile caused by the spectral stitching of the receiver samples.

Aliases appear in the HRR profile at intervals of $\frac{c}{2\Delta f}$ due to periodic disturbances caused by stitching the receiver samples at intervals of $\Delta f$ in order to form the stitched spectrum. In this embodiment, aliases within the HRR profile are reduced by de-aliasing. De-aliasing is implemented by:

determining a maximum power, $P_{max}$, within the high range resolution profile and identifying the range, $R_{max}$, corresponding to the maximum power;

defining alias regions of the high range resolution profile, the alias regions respectively having centres at ranges $R_{max} + n\frac{c}{2\Delta f}$, where $n \neq 0$, and each alias region having a width of $\pm\frac{c}{4\Delta f}$ about its centre;

determining a maximum power, $A_{max}$, within the alias regions, each alias region having a power spectrum;

defining a central region of the high range resolution profile, the central region having a power spectrum and having a centre at the range, $R_{max}$, corresponding to the maximum power, $P_{max}$, and having a width of $\pm\dfrac{c}{4\Delta f}$ about its centre;

making a copy of the central region of the high range resolution profile and multiplying the power spectrum of copy by $\dfrac{A_{max}}{P_{max}}$ to form a scaled copy of the power spectrum of the central region; and

subtracting the scaled copy of the power spectrum of the central region from the power spectrum of each alias region.

Figure 7 shows a HRR profiles of a target comprising 2 dipoles spaced by 58 metres. The HRR profiles show principle returns from the first dipole 50 and the second dipole 52 and show aliases for the first dipole 54 and the second dipole 56. Figure 7a) shows a Classical HRR profile of the target. The length of the target is greater than the width, $\dfrac{c}{2\Delta f}$, of the HRR window and the limited HRR window of the Classical HRR profile results in the Classical HRR profile including a return for the second dipole that is wrapped into the HRR window, C thereby underestimating the range of the target by $\dfrac{\cdot c}{2\Delta f}$. Figure 7b) shows an HRR profile for the same target obtained using the method of the sixth embodiment of the invention. The targets are clearly separated and their ranges correctly determined, with no wrapping occurring.

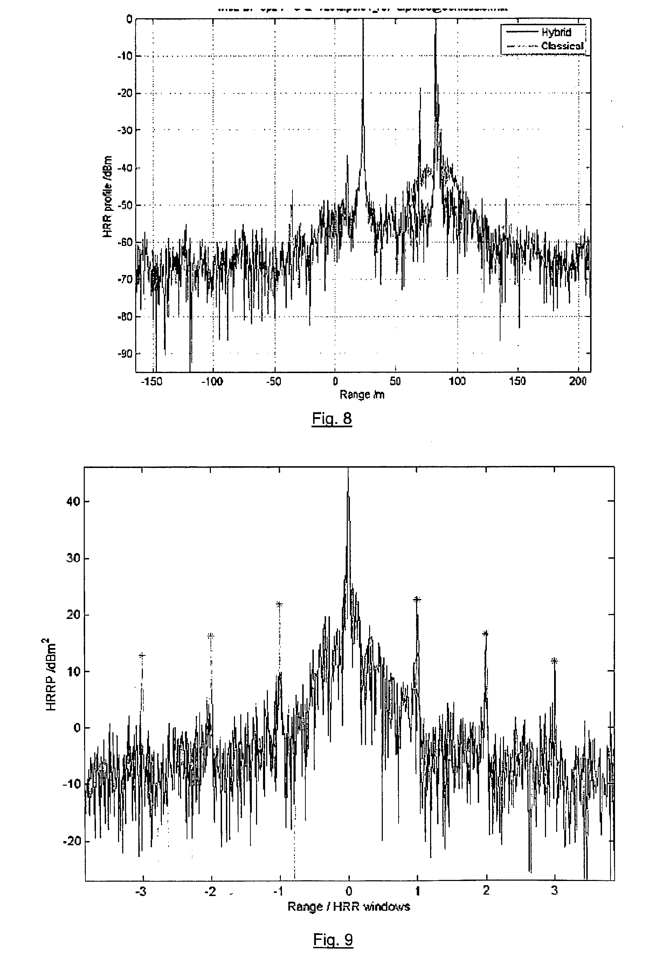

Figure 8 shows HRR profiles of a target comprising 2 static dipoles spaced by 58 metres. The target is illuminated using a radar signal comprising a waveform of 128 bursts of linearly chirped pulses of bandwidth 4.5 MHz with a frequency step of 3.2 MHz. Figure 8a) shows a Classical HRR profile of the target, again showing wrapping of one target into the range window. Figure 8b) shows an HRR profile obtained using the method of the sixth embodiment, which shows unambiguous separation of both targets at the correct range.

Figure 9a shows an HRR profile obtained using the method of the sixth embodiment before de-aliasing, in which aliases are clearly visible at $\dfrac{c}{2\Delta f}$ range windows. Figure 9b shows the same HRR profile following de-aliasing, from which it can be seen that the aliases at the $\dfrac{c}{2\Delta f}$ range windows are significantly reduced.

**Claims**

1. A method of providing a radar high range resolution profile of a target, the method comprising:

i. generating and transmitting a radar signal to the target, the radar signal having a signal bandwidth and comprising a stepped-frequency waveform comprising a first plurality of frequency steps;
ii. receiving corresponding radar echo signals from the target and sampling the echo signals to generate at least one receiver sample corresponding to each frequency step;
iii. generating a Fourier transform of the at least one receiver sample for each frequency step to form frequency domain receiver samples of each frequency step;
iv. spectrally stitching the frequency domain receiver samples of each frequency step to form a stitched spectrum;
v. applying a spectral scaling to the stitched spectrum to thereby form a scaled spectrally stitched spectrum, the spectral scaling comprising the ratio of a reference wideband chirp spectrum to a reference spectrally stitched spectrum, the reference wideband chirp spectrum comprising a Fourier transform of receiver samples corresponding to illuminating a reference static point target with a wideband radar signal having a bandwidth comprising the signal bandwidth and the reference spectrally stitched spectrum being generated by illuminating the reference static point target with the radar signal and applying steps ii. to iv.; and

vi. generating a cross-correlation of the scaled spectrally stitched spectrum and the reference spectrally stitched spectrum, to thereby form a high range resolution profile of the target.

2. A method as claimed in claim 1, wherein the stepped-frequency waveform comprises a said first plurality, Q, of bursts, each burst comprising a second plurality of linearly chirped pulses each having a carrier frequency and a chirp bandwidth, the carrier frequency of each pulse within a burst being substantially the same and the carrier frequency of consecutive bursts being incremented by a frequency step.

3. A method as claimed in claim 1 or 2, wherein the chirp bandwidth of the pulses is greater than the frequency step and includes a central portion having a bandwidth equal to the frequency step, the chirp bandwidths of pulses in consecutive bursts overlapping such that their central portions form a spectral continuum.

4. A method as claimed in any preceding claim, wherein step ii. comprises sampling the echo signals at a sampling frequency, $f_s$, to generate a third plurality, K, of receiver samples for each frequency step, $\Delta f$.

5. A method as claimed in claim 4, wherein step iii. comprises generating a discrete Fourier transform of the receiver samples for each frequency step.

6. A method as claimed in claim 4 or 5, wherein step iv. comprises:

   providing an array comprising a said first plurality of array slots, each array slot corresponding to one of said frequency steps and comprising a fourth plurality of array elements; and

   for each frequency step: selecting a said fourth plurality, $N_{stitch}$, of the frequency domain receiver samples, the said fourth plurality of samples comprising frequency domain receiver samples located at the centre of the Fourier transform of the respective frequency step; and locating said frequency domain receiver samples in said respective array slot, each sample forming a respective element of the array

7. A method as claimed in claim 6, wherein said fourth plurality, $N_{stitch}$ is given by $N_{stitch} = \dfrac{K\Delta f}{f_s}$ and $N_{stitch}$ is a positive integer.

8. A method as claimed in any of claims 4 to 7, wherein step ii. further comprises transforming said third plurality, K, of receiver samples of a said frequency step by adding a fourth plurality, m, of padding samples such that the following conditions are satisfied:

$$N_{stitch} = \frac{K\Delta f}{f_s} ;$$

$$N_{overlap} = \frac{1}{2}\left(K - N_{stitch}\right) ;$$

and

$$N_{stitch} + 2N_{overlap} = K$$

where $N_{stitch}$, $N_{overlap}$, and K are positive integers.

9. A method as claimed in claim 6 or 7, wherein a spectral scaling is provided for each said frequency step and is applied to the corresponding frequency domain receiver samples in the respective array slot.

10. A method as claimed in any preceding claim, wherein the wideband radar signal has a carrier frequency

$$f_{Tx} = f_1 + \frac{Q}{2}\Delta f \text{ ,}$$ where $f_1$ is the carrier frequency of the pulses of the first frequency step, and the reference wideband chirp spectrum comprises a Fourier transform of the wideband radar signal multiplied by a top hat function

having a width $Q\Delta f$, the result being sampled with range cells of $\dfrac{c}{2Q\Delta f}$ .

11. A method as claimed in claim 9, wherein the wideband chirp spectrum, $\Xi_{WB}(f)$, is calculated as

$$\Xi_{WB}(f) = \begin{cases} a_0 e^{-\frac{4\pi i R_0}{c}f} \mathcal{F}\left[\psi_{WB}(t)\right] & f_1 - \frac{\Delta f}{2} \leq f < f_1 + (Q - \frac{1}{2})\Delta f \\ 0 & \text{otherwise} \end{cases}$$

where f is the spectral frequency, $a_0$ is the reflectivity of the reference static point target, and $R_0$ is the range of the reference static point target.

12. A method as claimed in any preceding claim, wherein the method further comprises applying a power subtraction to the high range resolution profile following step vi., the power subtraction being arranged to reduce the power of any aliases caused by the spectral stitching in the high range resolution profile.

13. A method as claimed in claim 12, wherein applying the power subtraction comprises:

   determining a maximum power, $P_{max}$, within the high range resolution profile and identifying the range, $R_{max}$, corresponding to the maximum power;

   defining alias regions of the high range resolution profile, the alias regions respectively having centres at ranges

   $$R_{max} + n\frac{c}{2\Delta f} \text{ ,}$$ where $n \neq 0$, and each alias region having a width of $\pm\dfrac{c}{4\Delta f}$ about its centre;

   determining a maximum power, $A_{max}$, within the alias regions, each alias region having a power spectrum; defining a central region of the high range resolution profile, the central region having a power spectrum and having a centre at the range, $R_{max}$, corresponding to the maximum power, $P_{max}$, and having a width of $\pm\dfrac{c}{4\Delta f}$

   about its centre;

   making a copy of the central region of the high range resolution profile and multiplying the power spectrum of

   copy by $\dfrac{A_{max}}{P_{max}}$ to form a scaled copy of the power spectrum of the central region; and

   subtracting the scaled copy of the power spectrum of the central region from the power spectrum of each alias region.

PRIOR ART

<u>Fig. 1</u>

PRIOR ART

<u>Fig. 2</u>

14

Generate and transmit stepped-frequency waveform radar signal to target

↓

Receive radar echo signals from target and sample to generate at least one receiver sample corresponding to each frequency step of radar signal

↓

Generate Fourier transform of receiver sample for each frequency step to form frequency domain receiver samples

↓

Spectrally stitch frequency domain receiver samples of each frequency step to form a stitched spectrum

↓

Apply a spectral scaling to the stitched spectrum to form a scaled spectrally stitched spectrum, spectral scaling comprising the ratio of a reference wideband chirp spectrum to a reference spectrally stitched spectrum

↓

Generate a cross-correlation of the scaled spectrally stitched spectrum and the reference spectrally stitched spectrum, to form a high range resolution profile of the target

Fig. 3

Generate and transmit stepped-frequency waveform radar signal to target

↓

Receive radar echo signals from target and sample to generate at least one receiver sample corresponding to each frequency step of radar signal

↓

Generate Fourier transform of receiver sample for each frequency step to form frequency domain receiver samples

↓

Spectrally stitch frequency domain receiver samples of each frequency step to form a stitched spectrum

↓

Apply a spectral scaling to the stitched spectrum to form a scaled spectrally stitched spectrum, spectral scaling comprising the ratio of a reference wideband chirp spectrum to a reference spectrally stitched spectrum

↓

Generate an inverse Fourier transform of the scaled spectrally stitched spectrum to form time domain samples of the spectrally stitched spectrum

↓

Generate inverse Fourier transform of the reference spectrally stitched spectrum to form time domain samples of the reference spectrally stitched spectrum

↓

Cross-correlate time domain samples of scaled spectrally stitched spectrum and time domain samples of reference spectrally stitched spectrum to generate high range resolution profile of target

Fig. 4

Generate and transmit stepped-frequency
waveform radar signal to target

↓

Receive radar echo signals from target and
sample to generate at least one receiver
sample corresponding to each frequency step
of radar signal

↓

Generate Fourier transform of receiver
sample for each frequency step to form
frequency domain receiver samples

↓

Spectrally stitch frequency domain receiver
samples of each frequency step to form a
stitched spectrum

↓

Apply a spectral scaling to the stitched
spectrum to form a scaled spectrally stitched
spectrum, spectral scaling comprising the
ratio of a reference wideband chirp spectrum
to a reference spectrally stitched spectrum

↓

Multiply the scaled spectrally stitched
spectrum with the reference spectrally
stitched spectrum

↓

Generate an inverse Fourier transform of the
multiplied spectrum

Fig. 5

Fig. 6

Fig. 7

Fig. 8

Fig. 9

Europäisches
Patentamt
European
Patent Office
Office européen
des brevets

# EUROPEAN SEARCH REPORT

Application Number

EP 10 25 0042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Chapter 3, Reconstruction of Target Reflectivity Spectrum" In: Richard Thomas Lord: "Aspects of Stepped-Frequency Processing for Low-Frequency SAR Systems" February 2000 (2000-02), Department of Electrical Engineering, University of Cape Town , Cape Town , XP002586477 , pages 43-65 | 1-11 | INV. G01S13/34 G01S7/41 ADD. G01S13/02 |
| A | | 12,13 | |
| A,D | FRENCH A: "Improved High Range Resolution Profiling of Aircraft using Stepped-Frequency Waveforms with an S-Band Phased Array Radar" RADAR, 2006 IEEE CONFERENCE ON APRIL 2006, PISCATAWAY, NJ, USA,IEEE, PISCATAWAY, NJ, USA LNKD- DOI:10.1109/RADAR.2006.1631778, 1 April 2006 (2006-04-01), pages 69-75, XP010918337 ISBN: 978-0-7803-9496-4 * the whole document * | 1-13 | |
| A | SCHIMPF H ET AL: "High range resolution by means of synthetic bandwidth generated by frequency-stepped chirps" ELECTRONICS LETTERS, IEE STEVENAGE, GB LNKD- DOI:10.1049/EL:20030829, vol. 39, no. 18, 4 September 2003 (2003-09-04), pages 1346-1348, XP006020912 ISSN: 0013-5194 * the whole document * | 1-13 | |

**TECHNICAL FIELDS SEARCHED (IPC)**

G01S

-/--

The present search report has been drawn up for all claims

| Place of search | Date of completion of the search | Examiner |
|---|---|---|
| Munich | 22 June 2010 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 10 25 0042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GLADKOVA I ET AL: "Grating lobes suppression in stepped-frequency pulse train" IEEE TRANSACTIONS ON AEROSPACE AND ELECTRONIC SYSTEMS, IEEE SERVICE CENTER, PISCATAWAY, NJ, US, vol. 44, no. 4, 1 October 2008 (2008-10-01), pages 1265-1275, XP011248804 ISSN: 0018-9251 * the whole document * ----- | 1-13 | |
| A | WALBRIDGE M R ET AL: "Reduction of range ambiguities by using irregularly spaced frequencies in a synthetic wideband waveform" 19990511, 11 May 1999 (1999-05-11), pages 2/1-2/6, XP006500597 * the whole document * ----- | 1-13 | |
| A | RABIDEAU D J: "Nonlinear synthetic wideband waveforms" PROCEEDINGS OF THE 2002 IEEE RADAR CONFERENCE, 25 April 2002 (2002-04-25), pages 212-219, XP007913405 Piscataway, NJ, USA ISBN: 0-7803-7357-X * the whole document * ----- | 1-13 | **TECHNICAL FIELDS SEARCHED (IPC)** |

The present search report has been drawn up for all claims

| Place of search | Date of completion of the search | Examiner |
|---|---|---|
| Munich | 22 June 2010 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. FRENCH.** Improved high range resolution profiling of aircraft using stepped-frequency waveforms with an S-band phased array radar. *IEEE Radar Conference,* 2006